Europäisches Patentamt

European Patent Office

Office européen des brevets

(19)

(11) EP 1 365 580 A1

(12) **EUROPEAN PATENT APPLICATION**
published in accordance with Art. 158(3) EPC

(43) Date of publication:
**26.11.2003 Bulletin 2003/48**

(21) Application number: **02716457.3**

(22) Date of filing: **29.01.2002**

(51) Int Cl.7: **H04N 5/20**, H04N 5/66,
H04N 1/409, G06T 5/00,
G09G 5/10

(86) International application number:
**PCT/JP02/00675**

(87) International publication number:
**WO 02/062055 (08.08.2002 Gazette 2002/32)**

(84) Designated Contracting States:
**AT BE CH CY DE DK ES FI FR GB GR IE IT LI LU MC NL PT SE TR**

(30) Priority: **31.01.2001 JP 2001022803**

(71) Applicant: **Sanyo Electric Co., Ltd.**
**Moriguchi-shi, Osaka 570-8677 (JP)**

(72) Inventors:
• **TOMINAGA, Ryuichiro**
**Moriguchi-shi, Osaka 570-8677 (JP)**
• **MORI, Yukio**
**Moriguchi-shi, Osaka 570-8677 (JP)**
• **OKADA, Seiji**
**Moriguchi-shi, Osaka 570-8677 (JP)**

(74) Representative: **Glawe. Delfs. Moll**
**Patentanwälte**
**Postfach 26 01 62**
**80058 München (DE)**

(54) **IMAGE PROCESSING CIRCUIT**

(57)     The present invention relates to an image processing circuit for performing contrast highlighting and smoothing of an image-related apparatus such as a color camera or a monitor. The image processing circuit according to the present invention comprises first means for calculating an average luminance in a portion surrounding a target pixel, and second means for controlling input-output characteristics on the basis of the average luminance calculated by the first means, to control the luminance of the target pixel.

FIG. 1

EP 1 365 580 A1

## Description

Technical Field

The present invention relates to an image processing circuit for performing contrast highlighting and smoothing of a video related apparatus such as a color camera or a monitor.

Background Art

In a single chip CCD (Charge Coupled Device) color camera, for example, contrast highlighting processing has been performed throughout one screen. That is, in the conventional input-output characteristics (Yin-Yout) of a contrast highlighting circuit, the slope of the one-to-one input-output characteristics is increased relative to the whole screen, thereby highlighting contrast.

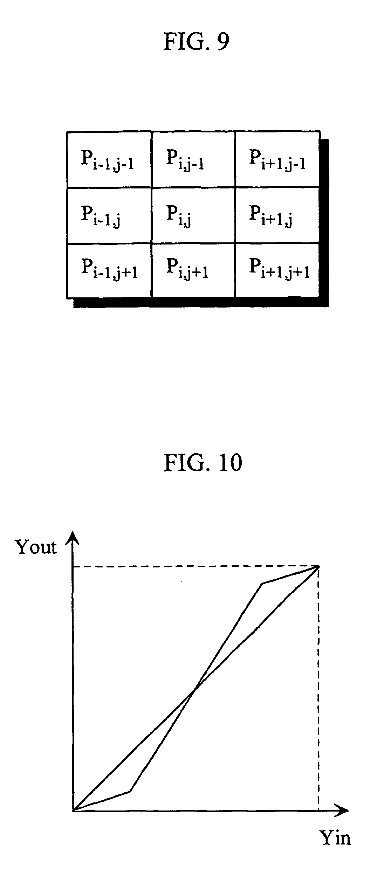

When an attempt to highlight contrast in an intermediate luminance portion is made, as shown in Fig. 10, however, gray scales in a low luminance portion and a high luminance portion are reduced.

An object of the present invention is to provide an image processing circuit capable of performing suitable contrast highlighting depending on a luminance in a portion surrounding a target pixel.

An object of the present invention is to provide an image processing circuit capable of performing suitable smoothing processing depending on a luminance in a portion surrounding a target pixel.

Disclosure of Invention

A first image processing circuit according to the present invention is characterized by comprising first means for calculating an average luminance in a portion surrounding a target pixel; and second means for controlling input-output characteristics on the basis of the average luminance calculated by the first means, to control the luminance of the target pixel.

A second image processing circuit according to the present invention is characterized by comprising first means for calculating an average luminance in a predetermined region centered at a target pixel; and second means for controlling input-output characteristics on the basis of the average luminance calculated by the first means, to control the luminance of the target pixel.

An example of the second means is one for changing the input-output characteristics depending on the average luminance calculated by the first means such that a rate of gray scale change in a low luminance portion is increased when the average luminance is low, a rate of gray scale change in a high luminance portion is increased when the average luminance is high, and a rate of gray scale change in an intermediate luminance portion is increased when the average luminance is an intermediate value.

An example of the input-output characteristics is one comprising a first straight line portion positioned at the lower left and having a low slope, a third straight line portion positioned at the upper right and having a low slope, and a second straight line portion connecting a right end of the first straight line portion and a left end of the third straight line portion and having a high slope when an input and an output are respectively used to enter the horizontal axis and the vertical axis. In this case, an example of the second means is one for changing the input-output characteristics such that the second straight line portion slides rightward and leftward depending on the average luminance calculated by the first means, to control the luminance of the target pixel.

An example of the second means is one for changing the input-output characteristics depending on the average luminance calculated by the first means such that a rate of gray scale change in a low luminance portion is reduced when the average luminance is low, a rate of gray scale change in a high luminance portion is reduced when the average luminance is high, and a rate of gray scale change in an intermediate luminance portion is reduced when the average luminance is an intermediate value.

An example of the input-output characteristics is one comprising a first straight line portion positioned at the lower left and having a high slope, a third straight line portion positioned at the upper right and having a high slope, and a second straight line portion connecting a right end of the first straight line portion and a left end of the third straight line portion and having a low slope when an input and an output are respectively used to enter the horizontal axis and the vertical axis. In this case, an example of the second means is one for changing the input-output characteristics such that the second straight line portion slides upward and downward depending on the average luminance calculated by the first means, to control the luminance of the target pixel.

An example of the first means in the above-mentioned first image processing circuit is one for calculating an average of the luminances of the pixels positioned in a direction diagonal to the target pixel in the predetermined region centered at the target pixel.

An example of the first means in the above-mentioned second image processing circuit is one for calculating an average of the luminances of the pixels comprising the target pixel and the pixels positioned in a direction diagonal to the target pixel in the predetermined region centered at the target pixel.

A third image processing circuit according to the present invention is characterized by comprising a plurality of average luminance calculating means for respectively calculating average luminances in a portion surrounding a target pixel using different types of filters; a plurality of luminance controlling means respectively provided for the average luminance calculating means for controlling input-output characteristics on the basis of the average luminances calculated by the corresponding average luminance calculating means, to control the luminances of the target pixel; and weighting and adding means for weighting the luminances of the target pixel which are respectively obtained by the luminance controlling means and adding the weighted luminances together, to calculate an output luminance corresponding to the target pixel.

A fourth image processing circuit according to the present invention is characterized by comprising a plurality of average luminance calculating means for respectively calculating average luminances in a predetermined region centered at a target pixel using different types of filters; a plurality of luminance controlling means respectively provided for the average luminance calculating means for controlling input-output characteristics on the basis of the average luminances calculated by the corresponding average luminance calculating means, to control the luminances of the target pixel; and weighting and adding means for weighting the luminances of the target pixel which are respectively obtained by the luminance controlling means and adding the weighted luminances together, to calculate an output luminance corresponding to the target pixel.

A fifth image processing circuit according to the present invention is characterized by comprising a plurality of average luminance calculating means for respectively calculating average luminances in a portion surrounding a target pixel using different types of filters; weighting and adding means for weighting the average luminances respectively obtained by the average luminance calculating means and adding the weighted average luminances together; and luminance controlling means for controlling input-output characteristics on the basis of a value obtained by the weighting and adding means, to control the luminance of the target pixel.

A sixth image processing circuit according to the present invention is characterized by comprising a plurality of average luminance calculating means for respectively calculating average luminances in a predetermined region centered at a target pixel using different types of filters; weighting and adding means for weighting the average luminances respectively obtained by the average luminance calculating means and adding the weighted average luminances together; and luminance controlling means for controlling input-output characteristics on the basis of a value obtained by the weighting and adding means, to control the luminance of the target pixel.

Examples of the types of filters include a wide band filter for performing addition in a predetermined wide region centered at the target pixel and a narrow band filter for performing addition in a predetermined narrow region centered at the target pixel.

There may be provided factor controlling means for controlling a weighting factor used in the weighting and adding means on the basis of the luminances of input videos respectively corresponding to the target pixel and the pixels surrounding the target pixel. An example of the factor controlling means is one comprising means for detecting contours in a region including the target pixel and the portion surrounding the target pixel, means for detecting a high frequency component in the region including the target pixel and the portion surrounding the target pixel, and means for controlling the weighting factor on the basis of the respective results of the detection by both the detecting means.

There may be provided factor controlling means for controlling a weighting factor used in the weighting and adding means on the basis of the colors of input videos respectively corresponding to the target pixel and the pixels in the portion surrounding the target pixel. An example of the factor controlling means is one for controlling the weighting factor on the basis of the total number of pixels respectively corresponding to the input videos which have a flesh color out of the target pixel and the pixels surrounding the target pixel.

Furthermore, there may be provided factor controlling means for controlling the weighting factor used in the weighting and adding means on the basis of the luminances and the colors of input videos respectively corresponding to the target pixel and the pixels surrounding the target pixel.

Brief Description of Drawings

Fig. 1 is a block diagram showing the configuration of a signal processing circuit in a single chip CCD color camera in a first embodiment.

Fig. 2 is a schematic view showing a block composed of five pixels in the horizontal direction and three pixels in the vertical direction, centered at a target pixel $P_{ij}$.

Fig. 3 is a graph showing an example of the input/output characteristics of a luminance signal used in a contrast highlighting circuit 5.

Fig. 4 is a schematic view showing an example in which the respective slopes of sides A, B, C, and D of a square Q shown in Fig. 3 are changed.

Fig. 5 is a schematic view showing the change in the input-output characteristics of a contrast highlighting circuit 5 depending on an average luminance Ylpf, in a portion surrounding a target pixel, calculated by an LPF 7.

Fig. 6 is a circuit diagram showing an example of the configuration of a contrast highlighting circuit 5.

Fig. 7 is a schematic view showing examples of Y1, Y2, and Y3 and examples of input-output characteristics in respective cases where an average luminance Ylpf in a portion surrounding a target pixel is low and high.

Fig. 8 is a graph showing another example of the input-output characteristics of a luminance signal used in a contrast highlighting circuit 5.

Fig. 9 is a schematic view showing a block composed of three pixels in the horizontal direction and three pixels in the vertical direction, centered at a target pixel $P_{ij}$.

Fig. 10 is a graph showing the conventional input-output characteristics of a contrast highlighting circuit.

Fig. 11 is a schematic view showing a wide band filter and a narrow band filter.

Fig. 12 is a diagram for explaining that a luminance difference can be increased in a wide band manner in a case where contrast highlighting processing is performed using a wide band filter, and a luminance difference can be increased locally in a case where contrast highlighting processing is performed using a narrow band filter.

Fig. 13 is a block diagram showing the configuration of a signal processing circuit in a single chip CCD color camera in a second embodiment.

Fig. 14 is a schematic view showing a flesh color region U on color difference coordinates.

Fig. 15 is a graph showing an example of data representing the relationship between a flesh color factor and a weighting factor.

Fig. 16 is a block diagram showing the detailed configuration of a second weighting and addition control circuit 110.

Fig. 17 is a schematic view for explaining the operations of a high frequency component calculation circuit 132 and a contour detection circuit 131.

Fig. 18 is a graph showing an example of data representing the relationship between a horizontal/vertical contour signal and a contour factor.

Fig. 19 is a graph showing an example of data representing the relationship between a high frequency component and a non-high frequency factor.

Fig. 20 is a graph showing an example of data representing the relationship between the maximum value and a second weighting factor.

Fig. 21 is a block diagram showing the configuration of a signal processing circuit in a single chip CCD color camera in a third embodiment.

Fig. 22 is a graph showing the input-output characteristics of a luminance signal used in a smoothing circuit 8.

Fig. 23 is a schematic view showing the change in the input-output characteristics of a smoothing circuit 8 depending on an average luminance Ylpf, in a portion surrounding a target pixel, calculated by an LPF 7.

Fig. 24 is a circuit diagram showing an example of the configuration of a smoothing circuit 8.

Fig. 25 is a schematic view showing examples of Y1, Y2, and Y3 and examples of input-output characteristics in respective cases where an average luminance Ylpf in a portion surrounding a target pixel is low and high.

Best Mode for Carrying Out the Invention

[A] Description of First Embodiment

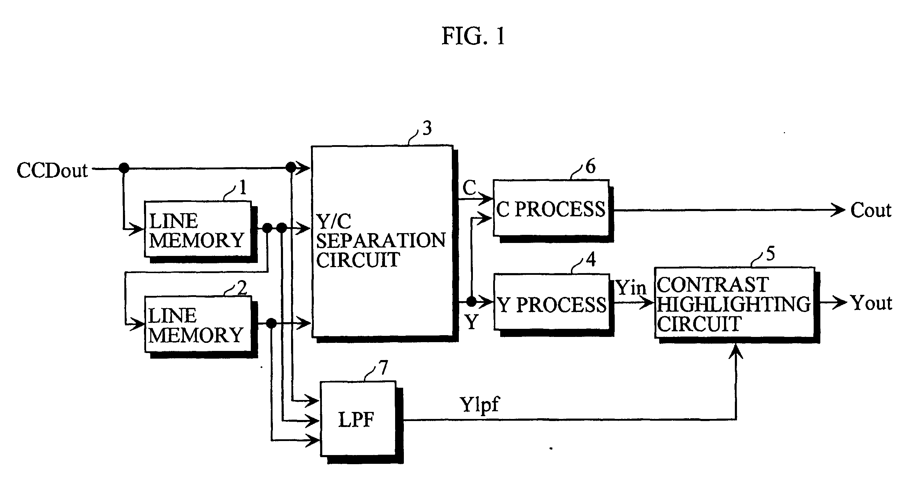

Referring now to Figs. 1 to 9, a first embodiment of the present invention will be described.

[1] Description of Configuration of Signal Processing Circuit in Single Chip CCD Color Camera

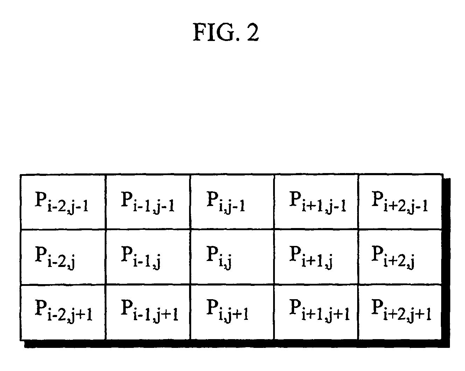

Fig. 1 illustrates the configuration of a signal processing circuit in a single chip CCD color camera.
A first line memory 1 generates a video signal obtained by delaying an input video signal (a CCD output signal CCDout) by 1H (one horizontal period). A second line memory 2 generates a video signal obtained by further delaying by 1H the video signal delayed by 1H.
The input video signal, the video signal delayed by 1H, and the video signal delayed by 2H are fed to a YC separation circuit 3, and are also fed to an LPF (Low-Pass filter) 7. A luminance signal Y and a chrominance signal C are outputted from the YC separation circuit 3.
The luminance signal Y is fed to a Y process circuit 4, is subjected to predetermined luminance signal processing, and is then fed as a signal Yin to a contrast highlighting circuit 5. The luminance signal Y and the chrominance signal C are fed to a C process circuit 6, are subjected to predetermined chrominance signal processing, and are then outputted as a chrominance signal Cout.
The LPF 7 calculates an average luminance Ylpf in a portion surrounding a target pixel. For example, the LPF 7 calculates, in a block composed of five pixels in the horizontal direction and three pixels in the vertical direction, centered at a target pixel $P_{ij}$, an average luminance Ylpf of the pixels $P_{IJ}$ (I = (i - 2) ~ (i + 2) , J = (j - 1) ~ (j + 1)) surrounding the target pixel $P_{ij}$, as shown in Fig. 2. The LPF 7 may calculate the average luminance Ylpf of all the pixels in the block shown in Fig. 2.
The average luminance Ylpf, in the portion surrounding the target pixel, calculated by the LPF 7 is fed as contrast controlling data to the contrast highlighting circuit 5.

[2] Description of Contrast Highlighting Circuit 5

[2-1] Description of Principle of Contrast Highlighting by Contrast Highlighting Circuit 5

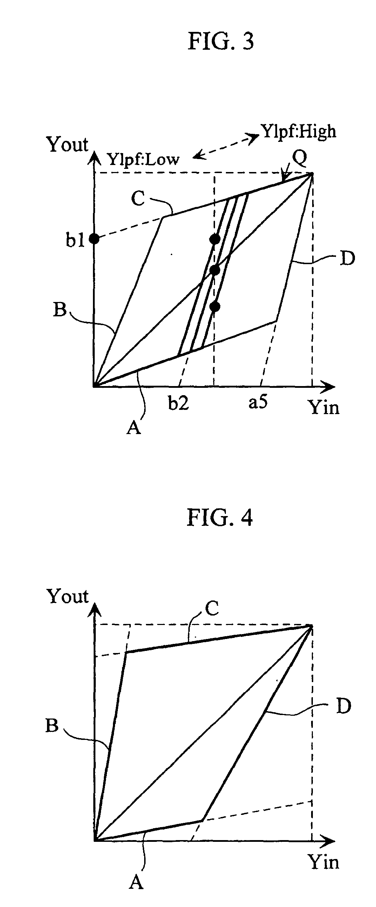

Fig. 3 illustrates the input-output characteristics of a luminance signal used in the contrast highlighting circuit 5.
The input-output characteristics are represented by a polygonal line in an approximately S shape, and comprise a first portion along a side A of a square Q, a third portion along a side C of the square Q, and a second portion connecting the first portion and the third portion and produced on the basis of the slopes of sides B and D of the square Q. The form of the polygonal line representing the input-output characteristics is defined by the respective slopes of the sides A, B, C, and D of the square Q. As shown in Fig. 4, the slopes of the sides A, B, C, and D of the square Q are changeable.

The input-output characteristics are changed by sliding the polygonal line, as indicated by an arrow, in units of pixels depending on the average luminance Ylpf, in the portion surrounding the target pixel, calculated by the LPF 7.

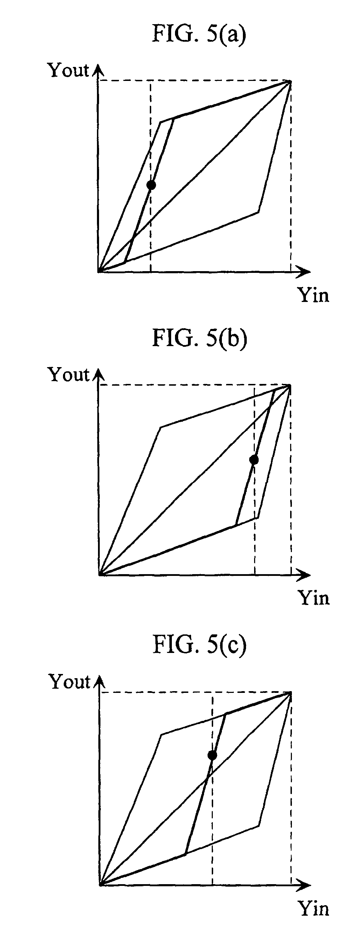

When the average luminance Ylpf in the portion surrounding the target pixel is low, the input-output characteristics are set such that the second portion of the polygonal line representing the input-output characteristics is positioned on the low luminance side so that a rate of gray scale change in a low luminance portion is increased, as shown in Fig. 5 (a). On the other hand, when the average luminance Ylpf in the portion surrounding the target pixel is high, the input-output characteristics are set such that the second portion of the polygonal line representing the input-output characteristics is positioned on the high luminance side so that a rate of gray scale change in a high luminance portion is increased, as shown in Fig. 5 (b).

When the average luminance Ylpf in the portion surrounding the target pixel is an intermediate luminance value, the input-output characteristics are set such that the second portion of the polygonal line representing the input-output characteristics is positioned in an intermediate luminance portion so that a rate of gray scale change in the intermediate luminance portion is increased, as shown in Fig. 5 (c).

The input-output characteristics are thus changed depending on the average luminance Ylpf in the portion surrounding the target pixel, thereby highlighting contrast.

[2-2] Description of Example of Configuration of Contrast Highlighting Circuit 5

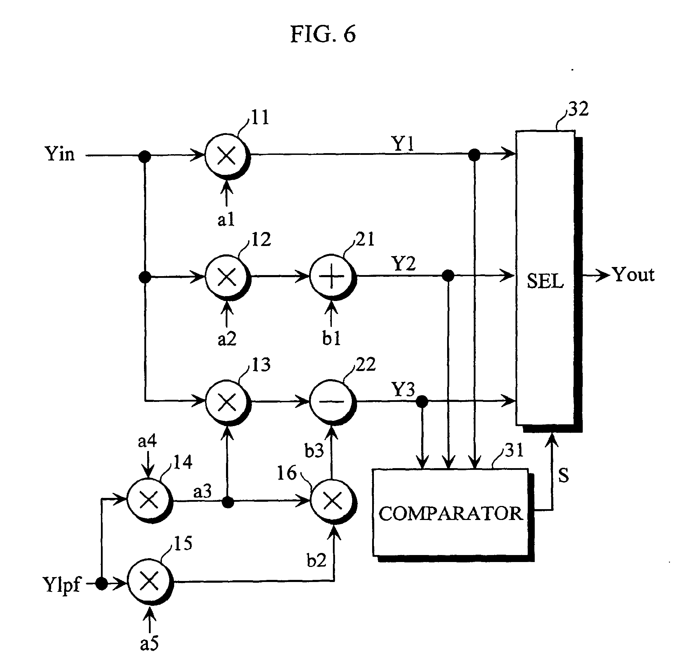

Fig. 6 illustrates an example of the configuration of the contrast highlighting circuit 5.

A first multiplier 11 multiples an input luminance Yin by the slope a1 of the straight line A of the square Q shown in Fig. 3, to operate an output luminance Y1 (= a1 • Yin) corresponding to the input luminance Yin on the straight line A of the square Q.

A circuit comprising a second multiplier 12 and a first adder 21 adds an intercept b1 of the straight line C to the slope a2 of the straight line C of the square Q shown in Fig. 3 times the input luminance Yin, to operate an output luminance Y2 (= a2 • Yin + b1) corresponding to the input luminance Yin on the straight line C of the square Q. The intercept b1 is the interconnection of the straight line C and the vertical axis of the graph shown in Fig. 3.

A circuit comprising a third multiplier 13 and a subtractor 22 subtracts b3 from the slope a3 of the second portion of the polygonal line connecting the straight lines A and C times the input luminance Yin, to operate an output luminance Y3 (= a3 • Yin - b3) corresponding to the input luminance Yin in the second portion. However, the slope a3 is a value obtained by a fourth multiplier 14 multiplying the average luminance Ylpf in the portion surrounding the target pixel by a4 produced on the basis of the straight lines B and D.

b3 is a value obtained by a sixth multiplier 16 multiplying by the slope a3 of the second portion of the polygonal line b2 obtained by a fifth multiplier 15 multiplying the average luminance Ylpf in the portion surrounding the target pixel by a Yin coordinate value a5 at the interconnection of the straight line D and the horizontal axis of the graph shown in Fig. 3. Here, b2 is a Yin coordinate value at the interconnection of an extension of the second portion of the polygonal line and the horizontal axis of the graph shown in Fig. 3. That is, b3 = a3 • b2, and Y3 = a3 (Yin - b2).

The three output luminances Y1, Y2, and Y3 are fed to a comparator 31, and are also fed to a selector 32. The comparator 31 outputs a control signal S to the selector 32 such that the selector 32 selects the output luminance having an intermediate value out of the output luminances Y1, Y2, and Y3 as an output luminance Yout obtained on the basis of the polygonal line (input-output characteristics) currently set depending on the average luminance Ylpf in the portion surrounding the target pixel. Consequently, the selector 32 outputs as Yout the output luminance having an intermediate value out of the three output luminances Y1, Y2, and Y3.

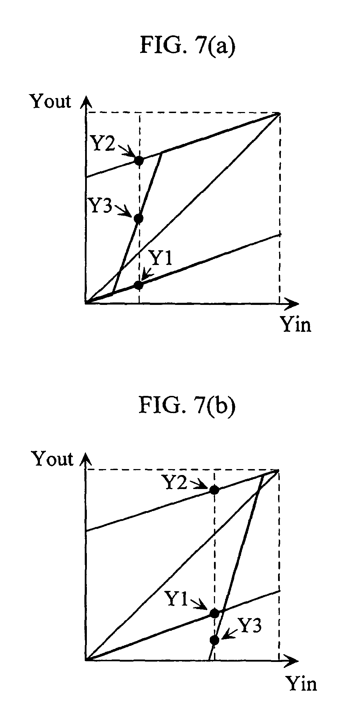

Fig. 7 (a) illustrates an example of Y1, Y2, and Y3 and an example of input-output characteristics in a case where the average luminance Ylpf in the portion surrounding the target pixel is low, and Fig. 7 (b) illustrates an example of Y1, Y2, and Y3 and an example of input-output characteristics in a case where the average luminance Ylpf in the portion surrounding the target pixel is high.

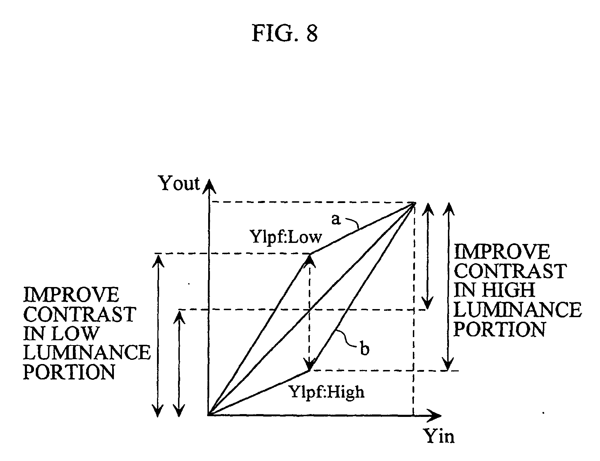

An example of the input-output characteristics of a luminance signal may be one as shown in Fig. 8. That is, in this example, the input-output characteristics are changed depending on the average luminance Ylpf in the portion surrounding the target pixel between polygonal lines a and b.

More specifically, when the average luminance Ylpf in the portion surrounding the target pixel is low, a bending point of the polygonal line is moved upward to increase a rate of gray scale change in a low luminance portion, as indicated by the polygonal line a. Conversely, when the average luminance Ylpf in the portion surrounding the target pixel is high, a bending point of the polygonal line is moved downward to increase a rate of gray scale change in a high luminance portion, as indicated by the polygonal line b.

Although in the above-mentioned embodiment, the input-output characteristics of the luminance signal used in the contrast highlighting circuit 5 are controlled on the basis of the average luminance in the portion surrounding the target pixel, the input-output characteristics of the luminance signal may be controlled on the basis of the average luminance in a predetermined region centered at the target pixel.

Although in the above-mentioned embodiment, used as the LPF 7 is one for calculating the average luminance of pixels surrounding the target pixel, as shown in Fig. 2, the average luminance of a group of pixels existing in a direction diagonal to the target pixel may be calculated in the predetermined region centered at the target pixel.

As shown in Fig. 9, for example, used as the LPF 7 is one for calculating the average luminance of four pixels $P_{i-1,j-1}$, $P_{i+1,j-1}$, $P_{i-1, j+1}$, $P_{i+1, j+1}$ existing in a direction diagonal to a target pixel $P_{ij}$ in a region composed of three pixels by three pixels centered at the target pixel $P_{ij}$. Further, used as the LPF 7 is one for calculating the average luminance of a total of five pixels, i.e., the four pixels $P_{i-1, j-1}$, $P_{i+1, j-1}$, $P_{i-1, j+1}$, $P_{i+1, j+1}$ and the target pixel $P_{ij}$.

When such an X-type LPF 7 is used, a contour portion in the diagonal direction can be also subjected to smooth contrast highlighting. When such an X-type LPF 7 is used, contour portions in the horizontal direction and the vertical direction can be also subjected to smooth contrast highlighting.

Although in the above-mentioned embodiment, description was made of a case where the present invention is applied to the single chip color camera, the present invention is also applicable to a video-related apparatus such as a television receiver, a VTR, or a liquid crystal projector.

[B] Description of Second Embodiment

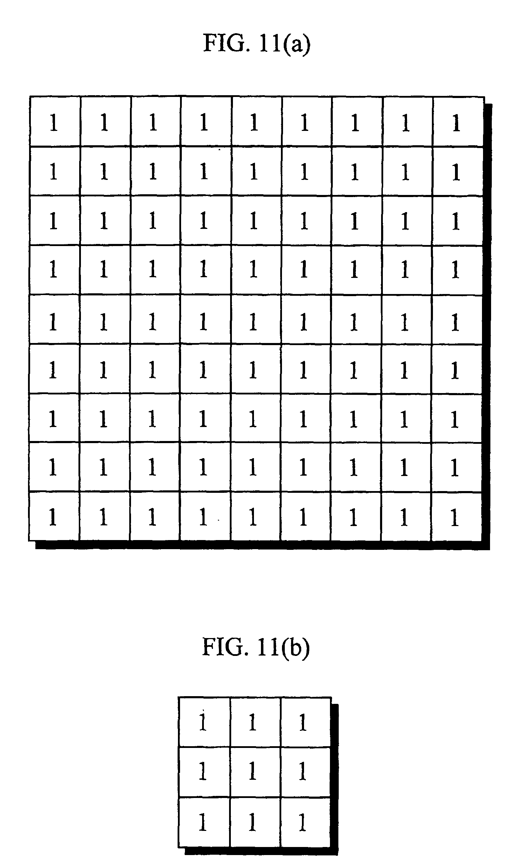

Referring to Figs. 11 to 20, a second embodiment of the present invention will be described.

[1] Description of Outline of Second Embodiment

In the above-mentioned first embodiment, the average luminance in the portion surrounding the target pixel is calculated using one type of LPF, and the input-output characteristics of the contrast highlighting circuit are controlled on the basis of the calculated average luminance, thereby highlighting contrast.

In the second embodiment, a plurality of types of LPFs are used. For example, a 9 by 9 wide band filter as shown in Fig. 11 (a) and a narrow band filter as shown in Fig. 11 (b) are used.

When an average luminance value in a portion surrounding a target pixel is calculated using the wide band filter, and the input-output characteristics of a contrast highlighting circuit are controlled on the basis of the calculated average luminance value, the luminance difference can be increased in a wide band manner.

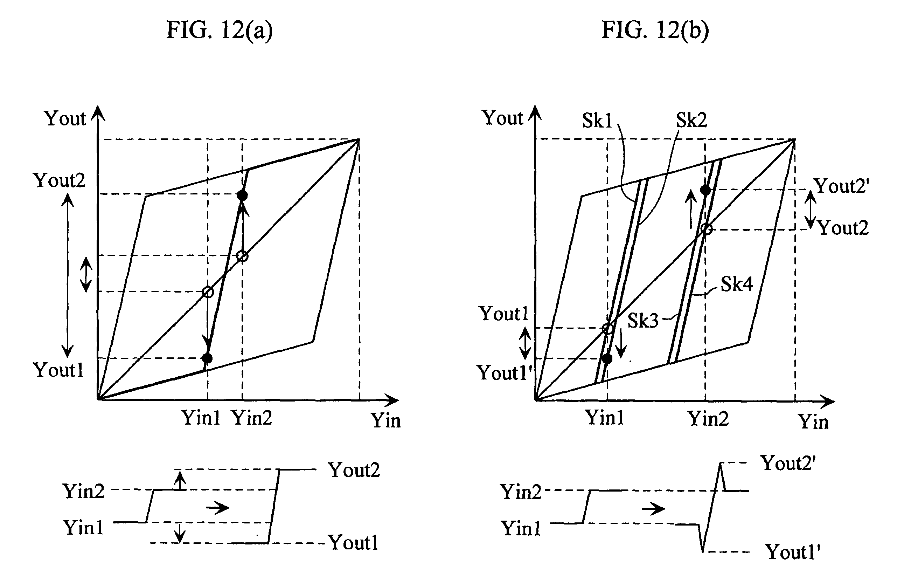

As shown in Fig. 12 (a) , when even in a region where an input luminance is changed from Yin1 to Yin2, the average luminance value in the portion surrounding the target pixel is calculated using the wide band filter, it can be assumed that an average luminance Ylpf in a portion surrounding a pixel having the luminance Yin1 and an average luminance Ylpf in a portion surrounding a pixel having the luminance Yin2 are approximately the same value.

The input-output characteristics of the contrast highlighting circuit which respectively correspond to the input luminances Yin1 and Yin2 are as shown in Fig. 12 (a), and the difference between an output luminance Yout1 corresponding to the input luminance Yin1 and an output luminance Yout2 corresponding to the input luminance Yin2 becomes larger than the difference between the input luminances Yin1 and Yin2, thereby improving contrast.

On the other hand, when the average luminance value in the portion surrounding the target pixel is calculated using the narrow band filter, and the input-output characteristics of the contrast highlighting circuit are controlled on the basis of the calculated average luminance value, the luminance difference can be locally increased.

As shown in Fig. 12 (b) , consider a contour portion where an input luminance is changed from Yin1 to Yin2. In a case where the average luminance value in the portion surrounding the target pixel is calculated using the narrow band filter, when an average luminance value in a portion surrounding a low-luminance flat portion ahead of the contour portion is taken as k1, an average luminance value in a portion surrounding a front edge of the contour portion becomes k2 (k2 > k1). When the input-output characteristics of the contrast highlighting circuit used with respect to a pixel in the low-luminance flat portion is taken as Sk1, the input-output characteristics of the contrast highlighting circuit used with respect to a pixel at the front edge of the contour portion becomes Sk2, so that an output luminance Yout1' at the front edge of the contour portion becomes lower, as compared with an output luminance Youtl in the low-luminance flat portion.

On the other hand, when an average luminance value in a portion surrounding a high-luminance flat portion behind the contour portion is taken as k4, an average luminance value in a portion surrounding a rear edge of the contour portion becomes k3 (k3 > k4). When the input-output characteristics of the contrast highlighting circuit used with respect to a pixel in the high-luminance flat portion is taken as Sk4, the input-output characteristics of the contrast highlighting circuit used with respect to a pixel at the rear edge of the contour portion becomes Sk3, so that an output luminance Yout2' at the rear edge of the contour portion becomes higher, as compared with an output luminance Yout2 in the high-luminance flat portion. As a result, the luminance difference in the contour portion is increased, thereby highlighting the contour portion.

When the same processing as that in the first embodiment is performed using the wide band filter, there are some advantages. For example, the textures of the road, the wall, and so on are increased, black between neutral colors becomes clear, and the low-luminance portion is raised. However, the disadvantage is that the luminance becomes non-uniform in the contour portion where the luminance greatly varies.

On the other hand, when the same processing as that in the first embodiment is performed using the narrow band filter, the advantage is that the contour can be highlighted. However, the disadvantage is that contrast is hardly changed.

In the second embodiment, therefore, the average luminance value in the portion surrounding the target pixel is found using each of the wide band filter and the narrow band filter, and contrast highlighting processing is performed, as in the first embodiment, using the average luminance value. The respective results thereof are weighted, and the weighted results are added together.

A weighting factor is calculated in consideration of two types of weighting and addition control, as described below.

(1) Weighting and Addition Control Based on Luminance

In a case where a contour portion where a luminance greatly varies (e.g. , a contour portion whose color is changed from black to white or a contour portion whose color is changed from white to black) exists in a relatively wide region hardly containing a high frequency component, when the contour portion is subjected to contrast highlighting processing using the wide band filter, the luminance becomes non-uniform. Accordingly, weight on the result of the contrast highlighting processing using the narrow band filter is increased in the contour portion, while weight on the result of the contrast highlighting processing using the wide band filter is increased in the region excluding the contour portion.

(2) Weighting and Addition Control Based on Color

The weighting factor is controlled on the basis of the color. For example, when contrast is too highlighted with respect to a flesh color portion having the color of a human face, the flesh color portion may, in some cases, give an unnatural impression. Weight on the result of the contrast highlighting processing using the narrow band filter is increased in order not to too highlight contrast with respect to the flesh color portion.

[2] Description of Circuit in Second Embodiment

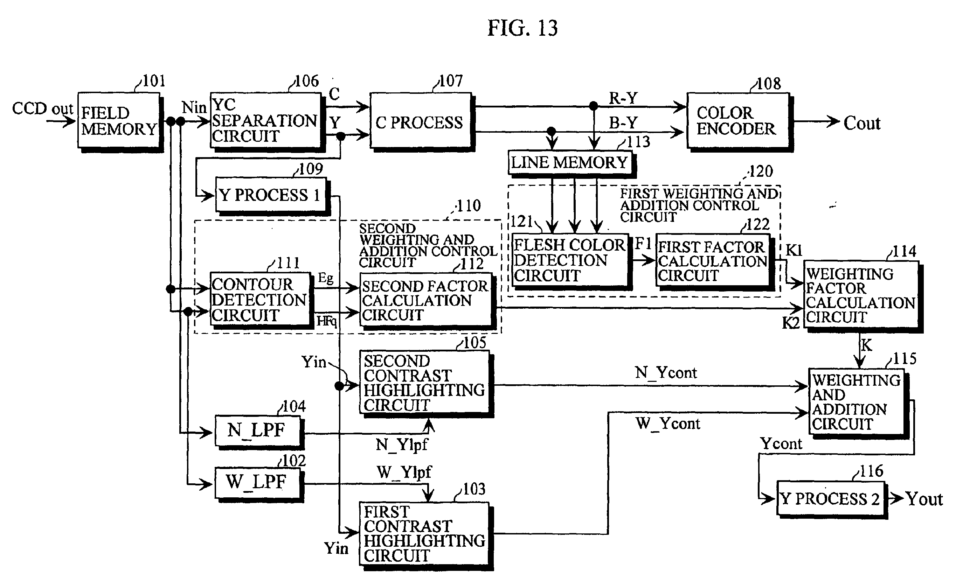

Fig. 13 illustrates the configuration of a signal processing circuit in a single chip CCD color camera.

A field memory 101 has a plurality of line memories, and stores an input video signal (a CCD output signal CCDin) corresponding to one field.

A signal Win corresponding to nine lines in the video signal stored in the field memory 101 is fed to a wide band filter W_LPF 102, where an average luminance (an average wide band luminance) W_Ylpf in a portion surrounding a target pixel is calculated. The average wide band luminance W_Ylpf is fed as a contrast controlling signal to a first contrast highlighting circuit 103.

On the other hand, a signal Nin corresponding to three lines at the center out of the nine lines is fed to a narrow band filter N LPF 104, where an average luminance (an average narrow band luminance) N_Ylpf in a portion surrounding a target pixel is calculated. The average narrow band luminance N_Ylpf is fed as a contrast controlling signal to a second contrast highlighting circuit 105.

The signal Win corresponding to nine lines is also fed to a second weighting and addition control circuit 110. The signal Nin corresponding to three lines is also fed to a YC separation circuit 106.

A luminance signal Y and a chrominance signal C are outputted from the YC separation circuit 106. The luminance signal Y outputted from the YC separation circuit 106 is fed to a first Y process circuit (Y process 1) 109, is subjected to predetermined luminance signal processing, and is then fed as a signal Yin to each of the contrast highlighting circuits 103 and 105.

The first contrast highlighting circuit 103 subjects the signal Yin to the same processing as the contrast highlighting circuit 5 in the first embodiment using the average wide band luminance W_Ylpf, to output W_Ycont. The second contrast highlighting circuit 105 subjects the signal Yin to the same processing as the contrast highlighting circuit 5 in the first embodiment using the average narrow band luminance N_Ylpf, to output N_Ycont. W_Ycont and N_Ycont are fed to a weighting and addition circuit 115.

The luminance signal Y and the chrominance signal C which are outputted from the YC separation circuit 106 are fed to a C process circuit 107. The C process circuit 107 generates color difference signals R-Y and B-Y from the luminance signal Y and the chrominance signal C, and outputs the generated color difference signals. The color difference signals R-Y and B-Y are outputted as a color signal Cout through a color encoder 108. Further, the color difference signals R-Y and B-Y are also fed to a line memory 113 capable of holding a signal corresponding to three lines.

The color difference signals R-Y and B-Y each corresponding to three lines which are stored in the line memory 113 are fed to a first weighting and addition control circuit 120. The first weighting and addition control circuit 120 comprises a flesh color detection circuit 121 and a first factor calculation circuit 122.

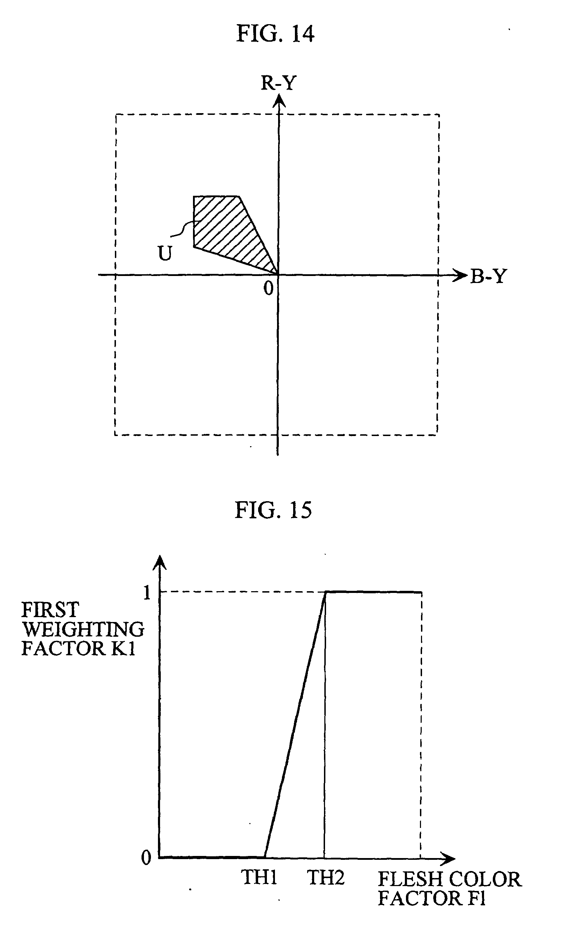

The flesh color detection circuit 121 finds the total number of pixels which have a flesh color (a flesh color factor) Fl in a region composed of 3 pixels by 3 pixels centered at a target pixel. It is judged whether or not the pixel has a flesh color by finding, on the basis of the color difference signals R-Y and B-Y at the pixel, the color position of the pixel on color difference coordinates shown in Fig. 14 and judging whether or not the found color position is within a flesh color region U on the color difference coordinates.

The flesh color factor Fl found by the flesh color detection circuit 121 is fed to the first factor calculation circuit 122. The first factor calculation circuit 122 calculates a first weighting factor K1 corresponding to the flesh color factor Fl found by the flesh color detection circuit 121 (a first weighting factor K1 corresponding to the target pixel) on the basis of data representing the relationship between the flesh color factor and the weighting factor.

Fig. 15 illustrates an example of data representing a flesh color factor and a weighting factor. In the example shown in Fig. 15, when a flesh color factor F1 is less than a threshold value TH1, a first weighting factor K1 becomes zero in order to increase weight on the result of contrast highlighting processing using a wide band filter. When the flesh color factor Fl is not less than the threshold value TH1 nor more than a threshold value TH2, the higher the flesh color factor Fl becomes, the higher the first weighting factor K1 becomes. When the flesh color factor Fl exceeds the threshold value TH2, the first weighting factor K1 becomes one in order to increase weight on the result of contrast highlighting processing using a narrow band filter. The weighting factor K1 calculated by the first factor calculation circuit 122 is fed to a weighting factor calculation circuit 114.

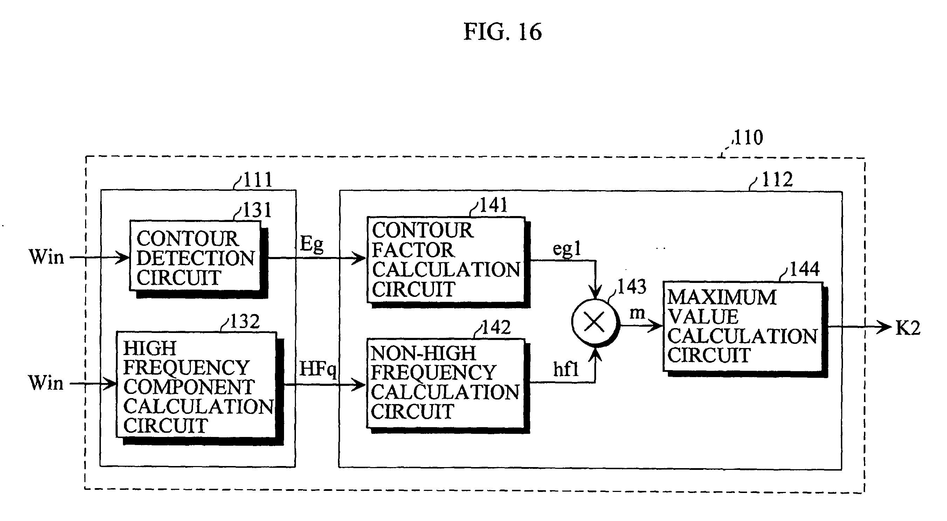

Fig. 16 illustrates the detailed configuration of the second weighting and addition control circuit 110.

As shown in Figs. 13 and 16, the second weighting and addition control circuit 110 comprises a contour detection circuit 111 and a second factor calculation circuit 112.

The contour detection circuit 111 comprises a contour detection circuit 131 to which the signal Win corresponding to nine lines is inputted and a high frequency component calculation circuit 132 to which the signal Win corresponding to nine lines is inputted.

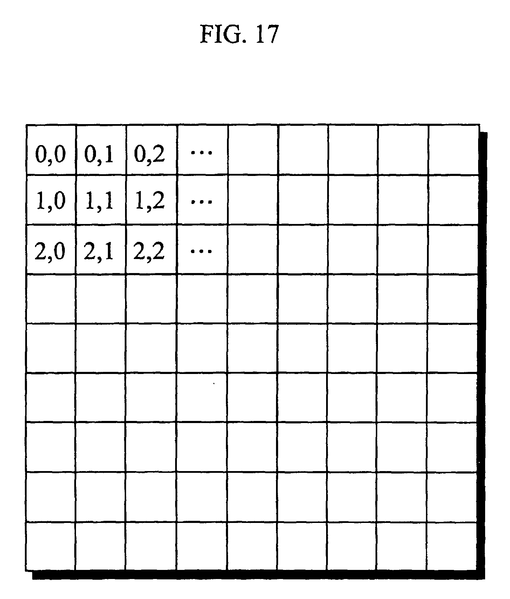

The high frequency component calculation circuit 132 calculates a high frequency component HFq in a region composed of nine pixels by nine pixels centered at a target pixel (a wide band) , as shown in Fig. 17. The high frequency component HFq is calculated using a DCT factor by a DCT (Discrete Cosine Transformation).

The contour detection circuit 131 calculates a horizontal/vertical contour signal Eg for each of pixels in the region composed of nine pixels by nine pixels centered at the target pixel shown in Fig. 17. The horizontal/vertical contour signal Eg corresponding to a certain pixel is calculated in the following manner. That is, it is found by first finding a difference value between the values of pixels adjacent to the pixel on both right and left sides and a difference value between the values of pixels adjacent to the pixel on both upper and lower sides, and then adding the difference values together.

The second factor calculation circuit 112 comprises a contour factor calculation circuit 141, a non-high frequency factor calculation circuit 142, a multiplier 143, and a maximum value calculation circuit 144.

The contour factor calculation circuit 141 calculates a contour factor eg1 corresponding to the horizontal/vertical contour signal Eg found by the contour detection circuit 131 on the basis of data representing the relationship between the horizontal/vertical contour signal and the contour factor which are previously determined.

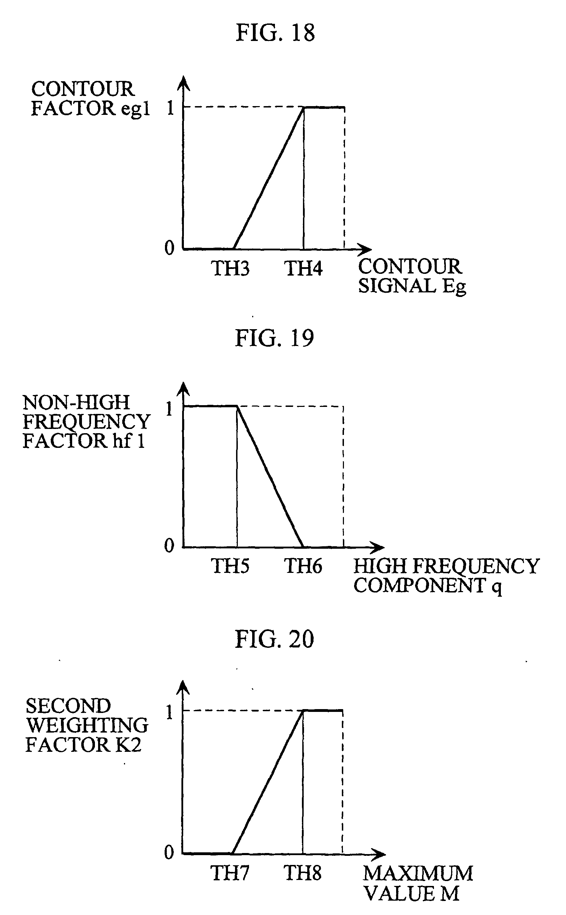

Fig. 18 illustrates an example of the data representing the relationship between the horizontal/vertical contour signal and the contour factor. In the example shown in Fig. 18, when the horizontal/vertical contour signal Eg is less than a threshold value TH3, the contour factor eg1 becomes zero. When the horizontal/vertical contour signal Eg is not less than the threshold value TH3 nor more than a threshold value TH4, the larger the horizontal/vertical contour signal Eg becomes, the higher the contour factor eg1 becomes. When the horizontal/vertical contour signal Eg exceeds the threshold value TH4, the contour factor eg1 becomes one.

The non-high frequency factor calculation circuit 142 calculates a non-high frequency factor hf1 corresponding to the high frequency component HFq found by the high frequency component calculation circuit 132 on the basis of data representing the relationship between the high frequency component and the non-high frequency factor which are previously determined.

Fig. 19 illustrates an example of the data representing the relationship between the high frequency component and the non-high frequency factor. In the example shown in Fig. 19, when the high frequency component HFq is less than a threshold value TH5, the non-hight frequency factor hf1 becomes one. When the high frequency component HFq is not less than the threshold value TH5 nor more than a threshold value TH6, the larger the high frequency component HFq becomes, the lower the non-high frequency factor hf1 becomes. When the high frequency component HFq exceeds the threshold value TH6, the non-high frequency factor hf1 becomes zero. That is, the smaller the high frequency component HFq in the region composed of nine pixels by nine pixels centered at the target pixel (the wide band) becomes, the higher the non-high frequency factor hf1 becomes.

The multiplier 143 multiplies the non-high frequency factor hf1 found with respect to the region composed of nine pixels by nine pixels centered at the target pixel by each of pixel contour factors eg1 respectively calculated for pixels in the region composed of nine pixels by nine pixels. The result of the multiplication m is fed to the maximum value calculation circuit 144.

The maximum value calculation circuit 144 finds the maximum value M of the results of the multiplication m calculated for the pixels in the region composed of nine pixels by nine pixels centered at the target pixel. A second weighting factor K2 corresponding to the calculated maximum value M (a second weighting factor K2 corresponding to the target pixel) is found on the basis of data representing the relationship between the maximum value and the second weighting factor which are previously determined.

Fig. 20 illustrates an example of the data representing the relationship between the maximum value and the second weighting factor. In the example shown in Fig. 20, when the maximum value M is less than a threshold value TH7, the second weighting factor K2 becomes zero in order to increase weight on the result of contrast highlighting processing using a wide band filter. When the maximum value M is not less than the threshold value TH7 nor more than a threshold value TH8, the larger the maximum value M becomes, the higher the second weighting factor K2 becomes. When the maximum value M exceeds the threshold value TH8, the second weighting factor K2 becomes one in order to increase weight on the result of contrast highlighting processing using a narrow band filter.

The second weighting factor K2 is fed to the weighting factor calculation circuit 114 (see Fig. 13). The weighting factor calculation circuit 114 selects as a final weighting factor K the higher one of the first weighting factor K1, corresponding to the target pixel, fed from the first weighting and addition control circuit 120 and the second weighting factor K2, corresponding to the target pixel, fed from the second weighting and addition control circuit 110, and feeds the selected factor to the weighting and addition circuit 115.

The weighting and addition circuit 115 adds W_Ycont and N_Ycont together on the basis of the following equation (1), to obtain a signal Ycont.

$$Ycont = K \cdot N\_Ycont + (1-K) \cdot W\_Ycont \qquad (1)$$

The obtained signal Ycont is outputted as Yout through a second Y process circuit (Y process 2) 116.

Although in the above-mentioned embodiment, Ycont is calculated by the weighting and addition circuit 115 weighting the respective outputs W_Ycont and N_Ycont of the two contrast highlighting circuits 103 and 105 and adding the weighted outputs together, Ycont may be calculated by one of the contrast highlighting circuits weighting the average wide band luminance W_Ylpf calculated by the wide band filter W_LPF 102 and the average narrow band luminance N_Ylpf calculated by the narrow band filter N_LPF 104 and adding the weighted luminances together to generate a contrast controlling signal and performing contrast highlighting processing using the contrast controlling signal.

[C] Description of Third Embodiment

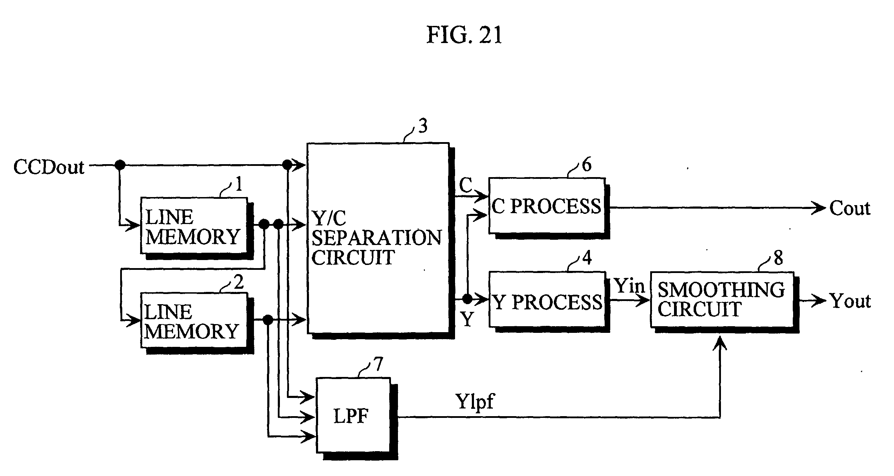

Referring now to Figs. 21 to 25, a third embodiment of the present invention will be described.

[1] Description of Configuration of Signal Processing Circuit in Single Chip CCD Color Camera

Fig. 21 illustrates the configuration of a signal processing circuit in a single chip CCD color camera. In Fig. 21, the same portions as those shown in Fig. 1 are assigned the same reference numerals and hence, the description thereof is not repeated.

In the signal processing circuit, the contrast highlighting circuit shown in Fig. 1 is replaced with a smoothing circuit 8.

[2] Description of Smoothing Circuit 8

[2-1] Description of Principle of Smoothing Processing by Smoothing Circuit 8

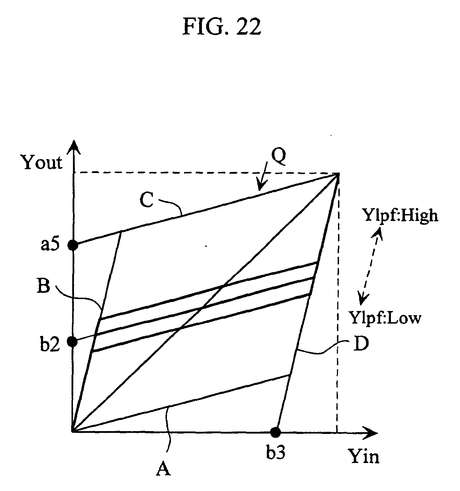

Fig. 22 illustrates the input-output characteristics of a luminance signal used in the smoothing circuit 8.

The input-output characteristics comprise a first portion along a side B of a square Q, a third portion along a side D of the square Q, and a second portion connecting the first portion and the third portion and produced on the basis of the slopes of sides A and C of the square Q. The form of a polygonal line representing the input-output characteristics is defined by the respective slopes of the sides A, B, C, and D of the square Q. The slopes of the sides A, B, C, and D of the square Q are changeable.

The input-output characteristics are changed by sliding the polygonal line, as indicated by an arrow, in units of pixels depending on an average luminance Ylpf, in a portion surrounding a target pixel, calculated by an LPF 7.

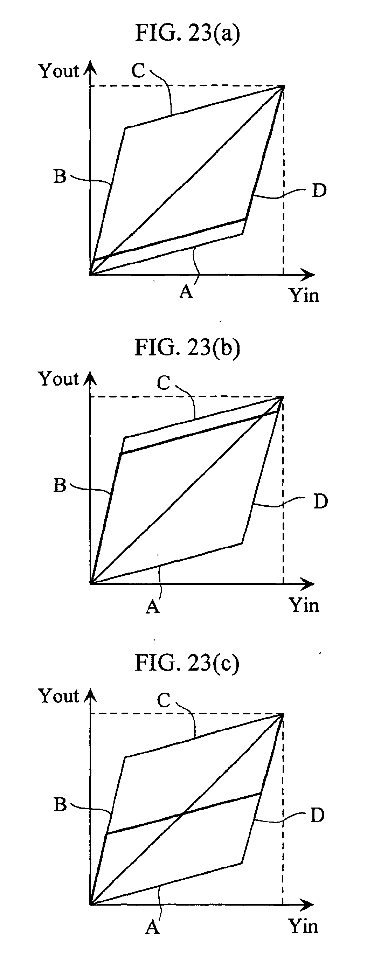

When the average luminance Ylpf in the portion surrounding the target pixel is low, the input-output characteristics are set such that the second portion of the polygonal line representing the input-output characteristics is positioned on the side of the side A so that a rate of gray scale change in a low luminance portion is reduced, as shown in Fig. 23 (a). On the other hand, when the average luminance Ylpf in the portion surrounding the target pixel is high, the input-output characteristics are set such that the second portion of the polygonal line representing the input-output characteristics is positioned on the side of the side C so that a rate of gray scale change in a high luminance portion is reduced, as shown in Fig. 23 (b).

When the average luminance Ylpf in the portion surrounding the target pixel is an intermediate luminance value, the input-output characteristics are set such that the second portion of the polygonal line representing the input-output characteristics are positioned in a portion intermediate between the sides A and C so that a rate of gray scale change in an intermediate luminance portion is reduced, as shown in Fig. 23 (c).

The input-output characteristics are thus changed depending on the average luminance Ylpf in the portion surrounding the target pixel, thereby smoothing a high frequency component throughout the screen.

[2-2] Description of Example of Configuration of Smoothing Circuit 8

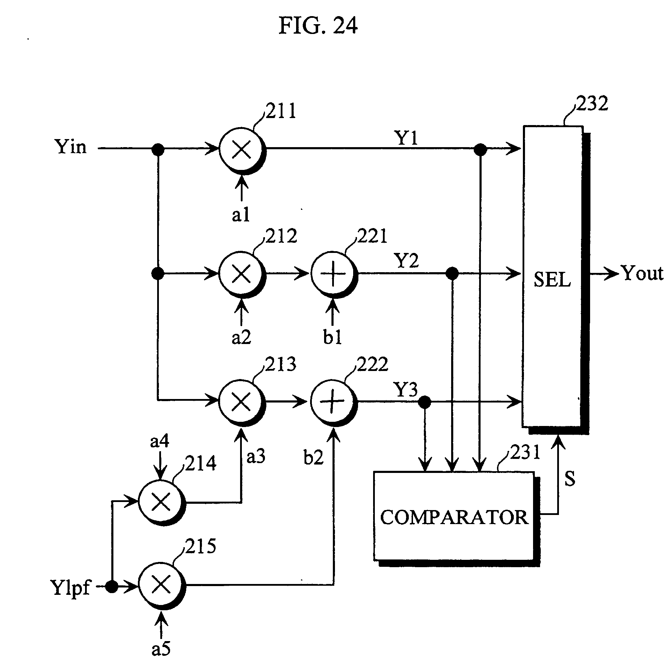

Fig. 24 illustrates an example of the configuration of the smoothing circuit 8.

A first multiplier 211 multiples an input luminance Yin by the slope a1 of the straight line B of the square Q shown in Fig. 22, to operate an output luminance Y1 (= a1 • Yin) corresponding to the input luminance Yin on the straight line B of the square Q.

A circuit comprising a second multiplier 212 and a first adder 221 adds b1 to the slope a2 of the straight line D of the square Q shown in Fig. 22 times the input luminance Yin, to operate an output luminance Y2 (= a2 • Yin + b1) corresponding to the input luminance Yin on the straight line D of the square Q. b1 is expressed by b1 = -b1', letting b1 be the slope a2 of the straight line D times a Yin coordinate value b3 at the interconnection of the straight line D and the horizontal axis of the graph shown in Fig. 22. Consequently, Y2 = a2 (Yin - b3).

A circuit comprising a third multiplier 213 and a second adder 222 adds an intercept b2 of the second portion of the polygonal line to the slope a3 of the second portion times the input luminance Yin, to operate an output luminance Y3 (= a3 Yin + b2) corresponding to the input luminance Yin in the second portion. The slope a3 is a value obtained by a fourth multiplier 214 multiplying the average luminance Ylpf in the portion surrounding the target pixel by a4 produced on the basis of the straight lines A and C. Further, the intercept b2 is a value obtained by a fifth multiplier 215 multiplying the average luminance Ylpf in the portion surrounding the target pixel by a Yout coordinate value a5 at the interconnection of the straight line C and the vertical axis of the graph shown in Fig. 22.

The three output luminances Y1, Y2, and Y3 are fed to a comparator 231, and are also fed to a selector 232. The comparator 231 outputs a control signal S to the selector 232 such that the selector 232 selects the output luminance having an intermediate value out of the output luminances Y1, Y2, and Y3 as an output luminance Yout obtained on the basis of the polygonal line (input-output characteristics) currently set depending on the average luminance Ylpf in the portion surrounding the target pixel. Consequently, the selector 232 outputs as Yout the output luminance having an intermediate value out of the three output luminances Y1, Y2, and Y3.

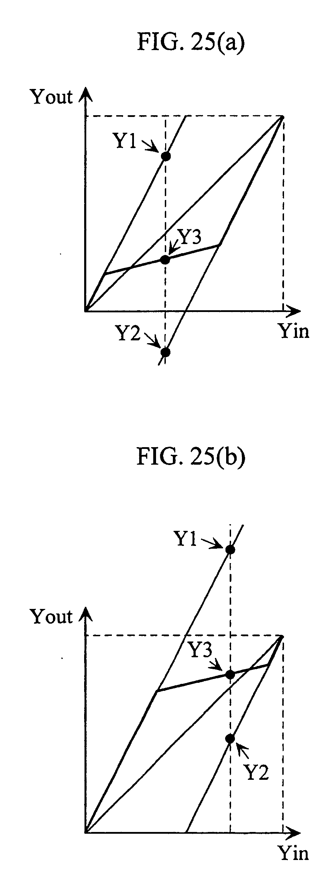

Fig. 25 (a) illustrates an example of Y1, Y2, and Y3 and an example of input-output characteristics in a case where the average luminance Ylpf in the portion surrounding the target pixel is low, and Fig. 25 (b) illustrates an example of Y1, Y2, and Y3 and an example of input-output characteristics in a case where the average luminance Ylpf in the portion surrounding the target pixel is high.

**Claims**

1. An image processing circuit comprising:

   first means for calculating an average luminance in a portion surrounding a target pixel; and
   second means for controlling input-output characteristics on the basis of the average luminance calculated by the first means, to control the luminance of the target pixel.

2. An image processing circuit comprising:

   first means for calculating an average luminance in a predetermined region centered at a target pixel; and
   second means for controlling input-output characteristics on the basis of the average luminance calculated by the first means, to control the luminance of the target pixel.

3. The image processing circuit according to either one of claims 1 and 2, wherein
   the second means changes the input-output characteristics depending on the average luminance calculated by the first means such that a rate of gray scale change in a low luminance portion is increased when the average luminance is low, a rate of gray scale change in a high luminance portion is increased when the average luminance is high, and a rate of gray scale change in an intermediate luminance portion is increased when the average luminance is an intermediate value.

4. The image processing circuit according to claim 3, wherein
   the input-output characteristics comprise a first straight line portion positioned at the lower left and having a low slope, a third straight line portion positioned at the upper right and having a low slope, and a second straight line portion connecting a right end of the first straight line portion and a left end of the third straight line portion and having a high slope when an input and an output are respectively used to enter the horizontal axis and the vertical axis, and
   the second means changes the input-output characteristics such that the second straight line portion slides rightward and leftward depending on the average luminance calculated by the first means, to control the luminance of the target pixel.

5. The image processing circuit according to either one of claims 1 and 2, wherein

the second means changes the input-output characteristics depending on the average luminance calculated by the first means such that a rate of gray scale change in a low luminance portion is reduced when the average luminance is low, a rate of gray scale change in a high luminance portion is reduced when the average luminance is high, and a rate of gray scale change in an intermediate luminance portion is reduced when the average luminance is an intermediate value.

6. The image processing circuit according to claim 5, wherein

the input-output characteristics comprise a first straight line portion positioned at the lower left and having a high slope, a third straight line portion positioned at the upper right and having a high slope, and a second straight line portion connecting a right end of the first straight line portion and a left end of the third straight line portion and having a low slope when an input and an output are respectively used to enter the horizontal axis and the vertical axis, and

the second means changes the input-output characteristics such that the second straight line portion slides upward and downward depending on the average luminance calculated by the first means, to control the luminance of the target pixel.

7. The image processing circuit according to claim 1, wherein

said first means calculates the average of the luminances of the pixels positioned in a direction diagonal to the target pixel in the predetermined region centered at the target pixel.

8. The image processing circuit according to claim 2, wherein

said first means calculates an average of the luminances of the pixels comprising the target pixel and the pixels positioned in a direction diagonal to the target pixel in the predetermined region centered at the target pixel.

9. An image processing circuit comprising:

a plurality of average luminance calculating means for respectively calculating average luminances in a portion surrounding a target pixel using different types of filters; a plurality of luminance controlling means respectively provided for the average luminance calculating means for controlling input-output characteristics on the basis of the average luminances calculated by the corresponding average luminance calculating means, to control the luminances of the target pixel; and weighting and adding means for weighting the luminances of the target pixel which are respectively obtained by the luminance controlling means and adding the weighted luminances together, to calculate an output luminance corresponding to the target pixel.

10. An image processing circuit comprising:

a plurality of average luminance calculating means for respectively calculating average luminances in a predetermined region centered at a target pixel using different types of filters; a plurality of luminance controlling means respectively provided for the average luminance calculating means for controlling input-output characteristics on the basis of the average luminances calculated by the corresponding average luminance calculating means, to control the luminances of the target pixel; and weighting and adding means for weighting the luminances of the target pixel which are respectively obtained by the luminance controlling means and adding the weighted luminances together, to calculate an output luminance corresponding to the target pixel.

11. An image processing circuit comprising:

a plurality of average luminance calculating means for respectively calculating average luminances in a portion surrounding a target pixel using different types of filters; weighting and adding means for weighting the average luminances respectively obtained by the average luminance calculating means and adding the weighted average luminances together; and luminance controlling means for controlling input-output characteristics on the basis of a value obtained by the weighting and adding means, to control the luminance of the target pixel.

12. An image processing circuit comprising:

a plurality of average luminance calculating means for respectively calculating average luminances in a predetermined region centered at a target pixel using different types of filters; weighting and adding means for weighting the average luminances respectively obtained by the average luminance calculating means and adding the weighted average luminances together; and

luminance controlling means for controlling input-output characteristics on the basis of a value obtained by the weighting and adding means, to control the luminance of the target pixel.

13. The image processing circuit according to any one of claims 9, 10, 11, and 12, wherein

the types of filters include a wide band filter for performing addition in a predetermined wide region centered at the target pixel and a narrow band filter for performing addition in a predetermined narrow region centered at the target pixel.

14. The image processing circuit according to any one of claims 9, 10, 11, 12, and 13, further comprising

factor controlling means for controlling a weighting factor used in the weighting and adding means on the basis of the luminances of input videos respectively corresponding to the target pixel and the pixels surrounding the target pixel.

15. The image processing circuit according to claim 14, wherein

the factor controlling means comprises

means for detecting contours in a region including the target pixel and the portion surrounding the target pixel,

means for detecting a high frequency component in the region including the target pixel and the portion surrounding the target pixel, and

means for controlling the weighting factor on the basis of the respective results of the detection by both the detecting means.

16. The image processing circuit according to any one of claims 9, 10, 11, 12, and 13, comprising

factor controlling means for controlling a weighting factor used in the weighting and adding means on the basis of the colors of input videos respectively corresponding to the target pixel and the pixels surrounding the target pixel.

17. The image processing circuit according to claim 16, wherein

the factor controlling means controls the weighting factor on the basis of the total number of pixels respectively corresponding to the input videos which have a flesh color out of the target pixel and the pixels surrounding the target pixel.

18. The image processing circuit according to any one of claims 9, 10, 11, 12, and 13, further comprising

factor controlling means for controlling the weighting factor used in the weighting and adding means on the basis of the luminances and the colors of input videos respectively corresponding to the target pixel and the pixels surrounding the target pixel.

FIG. 1

CCDout

LINE MEMORY /1

LINE MEMORY /2

Y/C SEPARATION CIRCUIT /3

C

Y

C PROCESS /6 → Cout

Y PROCESS /4 → Yin → CONTRAST HIGHLIGHTING CIRCUIT /5 → Yout

LPF /7 → Ylpf

EP 1 365 580 A1

# FIG. 2

| $P_{i-2,j-1}$ | $P_{i-1,j-1}$ | $P_{i,j-1}$ | $P_{i+1,j-1}$ | $P_{i+2,j-1}$ |
|---|---|---|---|---|
| $P_{i-2,j}$ | $P_{i-1,j}$ | $P_{i,j}$ | $P_{i+1,j}$ | $P_{i+2,j}$ |
| $P_{i-2,j+1}$ | $P_{i-1,j+1}$ | $P_{i,j+1}$ | $P_{i+1,j+1}$ | $P_{i+2,j+1}$ |

FIG. 3

FIG. 4

FIG. 5(a)

FIG. 5(b)

FIG. 5(c)

## FIG. 6

FIG. 7(a)

FIG. 7(b)

FIG. 8

# FIG. 9

| $P_{i-1,j-1}$ | $P_{i,j-1}$ | $P_{i+1,j-1}$ |
| --- | --- | --- |
| $P_{i-1,j}$ | $P_{i,j}$ | $P_{i+1,j}$ |
| $P_{i-1,j+1}$ | $P_{i,j+1}$ | $P_{i+1,j+1}$ |

# FIG. 10

FIG. 11(a)

| 1 | 1 | 1 | 1 | 1 | 1 | 1 | 1 | 1 |
|---|---|---|---|---|---|---|---|---|
| 1 | 1 | 1 | 1 | 1 | 1 | 1 | 1 | 1 |
| 1 | 1 | 1 | 1 | 1 | 1 | 1 | 1 | 1 |
| 1 | 1 | 1 | 1 | 1 | 1 | 1 | 1 | 1 |
| 1 | 1 | 1 | 1 | 1 | 1 | 1 | 1 | 1 |
| 1 | 1 | 1 | 1 | 1 | 1 | 1 | 1 | 1 |
| 1 | 1 | 1 | 1 | 1 | 1 | 1 | 1 | 1 |
| 1 | 1 | 1 | 1 | 1 | 1 | 1 | 1 | 1 |
| 1 | 1 | 1 | 1 | 1 | 1 | 1 | 1 | 1 |

FIG. 11(b)

| 1 | 1 | 1 |
|---|---|---|
| 1 | 1 | 1 |
| 1 | 1 | 1 |

FIG. 12(a)

FIG. 12(b)

22

EP 1 365 580 A1

FIG. 13

EP 1 365 580 A1

FIG. 14

FIG. 15

FIG. 16

EP 1 365 580 A1

FIG. 17

| 0,0 | 0,1 | 0,2 | ... | | | | | |
|-----|-----|-----|-----|---|---|---|---|---|
| 1,0 | 1,1 | 1,2 | ... | | | | | |
| 2,0 | 2,1 | 2,2 | ... | | | | | |
| | | | | | | | | |
| | | | | | | | | |
| | | | . | | | | | |
| | | | | | | | | |
| | | | | | | | | |
| | | | | | | | | |

FIG. 18

CONTOUR
FACTOR eg1

1

0

TH3    TH4    CONTOUR
SIGNAL Eg

FIG. 19

NON-HIGH
FREQUENCY
FACTOR hf 1

1

0

TH5    TH6    HIGH FREQUENCY
COMPONENT q

FIG. 20

SECOND
WEIGHTING
FACTOR K2

1

0

TH7    TH8    MAXIMUM
VALUE M

FIG. 21

EP 1 365 580 A1

FIG. 22

FIG. 23(a)

FIG. 23(b)

FIG. 23(c)

## FIG. 24

FIG. 25(a)

FIG. 25(b)

## INTERNATIONAL SEARCH REPORT

| International application No. |
| --- |
| PCT/JP02/00675 |

**A. CLASSIFICATION OF SUBJECT MATTER**
Int.Cl$^7$  H04N5/20 H04N5/66 H04N1/409 G06T5/00 G09G5/10B

According to International Patent Classification (IPC) or to both national classification and IPC

**B. FIELDS SEARCHED**

Minimum documentation searched (classification system followed by classification symbols)
Int.Cl$^7$  H04N5/14-5/217 H04N1/409 H04N5/66 G06T5/00 G09G5/10

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| | JP 9-147101 A (Sony Corp.), 06 June, 1997 (06.06.97), | |
| X | Par. Nos. [0014] to [0015] | 1,2,3,5, 7,8 |
| Y | Par. Nos. [0014] to [0015] | 11 |
| A | Par. Nos. [0014] to [0015] (Family: none) | 4,6 |
| | JP 8-163403 A (Fujitsu General Ltd.), 21 June, 1996 (21.06.96), | |
| X | Par. Nos. [0009] to [0012] (Family: none) | 1 |
| | JP 2000-156797 A (Sony Corp.), 06 June, 2000 (06.06.00), | |
| X | Par. Nos. [0028], [0078] to [0080] | 2,12,14, |
| Y | Par. Nos. [0078] to [0080] | 11 |
| A | Par. Nos. [0028], [0078] to [0080] (Family: none) | 9,10,13,15, 16,17,18 |

☐ Further documents are listed in the continuation of Box C.    ☐ See patent family annex.

| | |
| --- | --- |
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 23 April, 2002 (23.04.02) | 14 May, 2002 (14.05.02) |

| Name and mailing address of the ISA/ | Authorized officer |
| --- | --- |
| Japanese Patent Office | |
| Facsimile No. | Telephone No. |

Form PCT/ISA/210 (second sheet) (July 1998)